# EUROPÄISCHE PATENTSCHRIFT

(11) **EP 1 350 774 B1**
(45) Veröffentlichungstag und Bekanntmachung des Hinweises auf die Patenterteilung: **19.12.2007**
(21) Anmeldenummer: 03090063.3
(22) Anmeldetag: 14.03.2003
(51) Int. Cl.: C04B 20/10, B01J 21/06, B01D 53/86

(54) **Titandioxid enthaltende Bitumenemulsion**
Bitumen emulsion containing titanium dioxide
Émulsion bitumineuse contenant du dioxyde de titane

(30) Priorität: 15.03.2002 DE 10212591
(43) Veröffentlichungstag der Anmeldung: 08.10.2003
(73) Patentinhaber: Sachtleben Chemie GmbH, 47198 Duisburg (DE)
(72) Erfinder: Kämereit, Wilhelm, Dipl.-Ing., 40229 Düsseldorf (DE); Grimm, Claude, Dipl.-Ing., 2935 Bernevésin (CH)
(74) Vertreter: Meissner, Peter E.

(56) Entgegenhaltungen:
- EP-A- 0 919 667
- US-A- 5 223 031
- US-B1- 6 245 850

## Beschreibung

Die Erfindung betrifft eine Suspension aus einer Bitumenemulsion und hydrophobiertem Titanoxid sowie deren Verwendung.

In der US-A-5223031 ist ein Asphalt beschrieben, also ein Gemisch aus Gesteln, staubförmigen Füllern sowie Bitumen als Bindemittel, das zusätzlich TiO₂ enthält, und zwar als Pigment.
Das Titandioxid liegt dabei in kristalliner Form vor.

Die heutige Zeit ist davon geprägt, Umweltbelastungen in Grenzen zu halten oder diese zu reduzieren. Das gilt insbesondere für die Lebensbereiche: Energie- und Wasserversorgung, sowie für den Straßenverkehr.

Es ist bekannt, Titandioxid bei der Abgasreinigung und bei der Abwasseraufbereitung anzuwenden. Dabei werden bevorzugt Titandioxidfilme mit verunreinigten Wassern und Gasen in Kontakt gebracht. Unter Lichteinwirkung werden dann die Schadstoffe abgebaut. Derartige Anwendungen wurden sowohl im Bereich von Kraftwerken wie in Kläranlagen erprobt als auch zur Reduzierung der Abgasbelastung durch den Straßenverkehr untersucht. In Japan wurden Schallschutzwände mit einer TiO₂-haltigen Bitumenmasse angestrichen. Dabei konnte eine erhebliche Reduzierung der Stickoxid- und Schwefeldioxidbelastung erreicht werden.
(H₂SO₄).

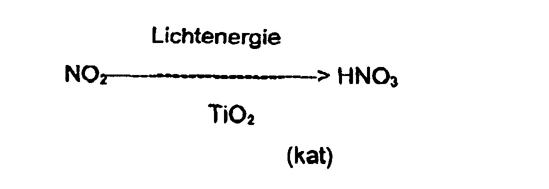

H₂O→'OH

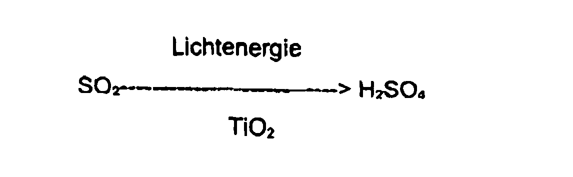

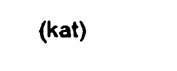

H₂O→'OH

Diese Säuren werden infolge der aus der CaO-Hydrolyse entstandenen Ca(OH)₂Präsenz in der Oberflächenschicht zu Calziumnitrat bzw. -sulfat neutralisiert.

2 HNO₃ + Ca(OH)₂ → Ca(NO₃)₂ + 2 H₂O

H₂SO₄ + Ca(OH)₂ → Ca SO₄ + 2 H₂O

Die aus den umweltschädlichen Abgasen entstandenen Produkte "Calziumnitrat" und "Calziumsulfat" sind wasserlöslich und wirken als Düngemittel.

Versuchsweise konnten im Bereich von Autostraßen die Stickoxidbelastungen um bis zu 80% und die Schwefeldioxidbelastungen um bis zu 35% reduziert werden.

Grundlage für die Suspension ist eine Bitumenemulsion, wie sie bereits beschrieben ist in DE 101 17 437.3 und 101 34 765.0, d.h. es wird eine kolloidale Emulsion aus 50 Gew.% Bitumen und 50 Gew.% Wasser, mit Betonit als anorganischem Emulgator und Ligninsulfonat als Dispergierhilfsmittel hergestellt.

Die Herstellung der erfindungsgemäßen Suspension erfolgt dann so, dass man dieser Bitumenemulsion in mineralischer Form 10 bis 40, bevorzugt 15 bis 30 Gew.% hydrophobiertes Titandioxid und hydrophobiertes Calziumoxid, und zwar 10 bis 30, bevorzugt 15 bis 20 Gew.% hydrophobiertes Calziumoxid - jeweils bezogen auf die insgesamt entstehende Suspension - beimischt und als spritz- bzw. nassmischfähiges Material verarbeitet, d.h. Oberflächenbeschichtungen ausführt oder Kaltasphalt herstellt.

Es hat sich gezeigt, daß durch zusätzliche Farbstoffzugaben wie z.B. 5 bis 15, bevorzugt 8 bis 12 Gew.% hydrophobiertes Titandioxid (weiß), Eisenoxid (rot), Chromoxid (grün) u.s.w. farbige Beschichtungen oder Asphalte erzeugt werden können.

## Patentansprüche

1. Suspension aus einer Bitumenemulsion und hydrophobiertem Titandioxid sowie hydrophobierten Hydroxiden, Oxiden und / oder Sulfaten von Alkali- bzw. Erdalkalimetallen, wobei die Titandioxide 10 bis 40, bevorzugt 15 bis 30 Gew.% der Suspension bilden.

2. Suspension nach Anspruch 1,
**dadurch gekennzeichnet,**
**dass** 10 bis 30 bevorzugt 15 bis 20 Gew.% hydrophobiertes Calziumoxid in der Suspension enthalten sind.

3. Suspension nach den Ansprüchen 1 und 2,
**dadurch gekennzeichnet,**
**dass** 5 bis 20 Gew.%, bevorzugt 10 bis 15 Gew.% hydrophobiertes Calziumhydroxid in der Suspension enthalten sind.

4. Suspension nach einem der vorstehenden Ansprüche,
**dadurch gekennzeichnet,**
**dass** zusätzlich Farbpigmente mit 5 bis 15, bevorzugt 8 bis 12 Gew.%, bezogen auf die gesamte Suspension enthalten sind.

5. Suspension nach einem der Ansprüche 1 bis 4,
**dadurch gekennzeichnet,**
**dass** sie zusätzlich 5 bis 15, bevorzugt 10 Gew.% der gesamten Suspension hydrophobierten Gips und/oder Zement enthält.

6. Verwendung der Suspension nach den vorstehenden Ansprüchen als Beschichtung oder Beimischung für Kontaktflächen bei der Abgas-und Abwasserreinigung.

## Claims

1. A suspension consisting of a bitumen emulsion and hydrophobised titanium dioxide and also hydrophobised hydroxides, oxides and/or sulphates of alkali or alkaline earth metals, the titanium dioxides forming 10 to 40, preferably 15 to 30, % by weight of the suspension.

2. A suspension according to Claim 1, **characterised in that** 10 to 30, preferably 15 to 20, % by weight hydrophobised calcium oxide is contained in the suspension.

3. A suspension according to Claims 1 and 2, **characterised in that** 5 to 20% by weight, preferably 10 to 15% by weight, hydrophobised calcium hydroxide is contained in the suspension.

4. A suspension according to one of the preceding claims, **characterised in that** additionally coloured pigments are contained therein in an amount of 5 to 15, preferably 8 to 12, % by weight, relative to the total suspension.

5. A suspension according to one of Claims 1 to 4, **characterised in that** it additionally contains 5 to 15, preferably 10, % by weight of the total suspension hydrophobised gypsum and/or cement.

6. The use of the suspension according to the preceding claims as a coating or admixture for contact surfaces in the purification of exhaust gas and waste water.

## Revendications

1. Suspension d'une émulsion de bitume et de dioxyde de titane hydrophobisé, ainsi que d'hydroxydes, d'oxydes et/ou de sulfates de métaux alcalins ou alcalinoterreux hydrophobisés, dans laquelle le dioxyde de titane représente de 10 à 40% en poids, et de préférence de 15 à 30% en poids, de la suspension.

2. Suspension selon la revendication 1,
**caractérisée en ce qu'**elle comporte de 10 à 30% en poids, et de préférence de 15 à 20% en poids, d'oxyde de calcium.

3. Suspension selon les revendications 1 et 2,
**caractérisée en ce qu'**elle comporte de 5 à 20% en poids, et de préférence de 10 à 15% en poids, d'hydroxyde de calcium hydrophobisé.

4. Suspension selon l'une des revendications précédentes,
**caractérisée en ce que**, par rapport à la suspension totale, elle comporte de plus de 5 à 15% en poids, et de préférence de 8 à 12% en poids, de pigments colorés.

5. Suspension selon l'une des revendications 1 à 4,
**caractérisée en ce que**, par rapport à la suspension totale, elle comporte de plus de 5 à 15% en poids, et de préférence 10% en poids, de gypse et/ou de ciment hydrophobisés.

6. Application de la suspension selon les revendications précédentes comme revêtement ou additif pour des surfaces de contact pour l'épuration des gaz d'échappement et des eaux usées.
